# EUROPÄISCHE PATENTSCHRIFT

(11) **EP 1 815 077 B1**
(45) Veröffentlichungstag und Bekanntmachung des Hinweises auf die Patenterteilung: **12.01.2011**
(21) Anmeldenummer: 05807392.5
(22) Anmeldetag: 21.11.2005
(51) Int. Cl.: E04B 1/80, E04B 1/90

(54) **WÄRMEDÄMMPLATTE**
THERMAL INSULATING BOARD
PANNEAU THERMOISOLANT

(30) Priorität: 22.11.2004 DE 102004056335
(43) Veröffentlichungstag der Anmeldung: 08.08.2007
(60) Teilanmeldung: 10011866.0
(73) Patentinhaber: Knauf Dämmstoffe GmbH, 59329 Wadersloh-Liesborn (DE)
(72) Erfinder: ZIMPFER, Harald, 97265 Hettstadt (DE); SEEMANN, Andreas, 59514 Welver (DE); MÜNDER, Kurt, 59555 Lippstadt (DE); TUMP, Michael, 57462 Olpe (DE)
(74) Vertreter: Farmer, Guy Dominic
(86) Internationale Anmeldenummer: PCT/EP2005/012443
(87) Internationale Veröffentlichungsnummer: WO 2006/056387

(56) Entgegenhaltungen:
- EP-A- 0 620 246
- EP-A- 1 142 942
- EP-A- 1 201 838
- DE-U1- 8 226 114
- US-A- 5 066 531
- PATENT ABSTRACTS OF JAPAN Bd. 017, Nr. 064 (M-1364), 8. Februar 1993 (1993-02-08) & JP 04 270643 A (SEKISUI PLASTICS CO LTD), 28. September 1992 (1992-09-28)

## Beschreibung

Die Erfindung betrifft eine wärme dämmplatte, insbesondere zur Isolierung von Außenfassaden, Dächern, Wänden und Decken von Gebäuden, bestehend aus zwei Teilen, wobei der eine Teil der Dämmplatte die wesentliche Dämmwirkung erbringt, während der andere Teil der Dämmplatte eine zusätzliche Schutzfunktion erfüllt.

Dämmmaterialien auf Basis von expandierbarem Polystyrol (EPS) sind seit langer Zeit bekannt und haben sich aufgrund ihrer Wärmeformbeständigkeit und ihrer vergleichsweise geringen Wärmeleitfähigkeit für verschiedene Anwendungen wie der Wärmedämmung von Gebäuden bewährt. Üblicherweise werden die Dämmmaterialien in Form von quaderförmigen Platten je nach den örtlichen Gegebenheiten und dem Anwendungszweck auf der Außen- oder Innenseite der zu isolierenden Gebäudewand angebracht und anschließend mit Putz beschichtet.

Die Wärmedämmung von aufgeschäumtem Polystyrol beruht auf seinem Aufbau aus einer Vielzahl an Polystyrolzellen, In denen Luft, die eine geringe Wärmeleitfähigkeit aufweist, fein verteilt ist, wobei diese Luft im Gegensatz zu Schaumstoffen in den Zellen verbleibt, so dass die Dämmwirkung über die Zeit konstant bleibt. Es ist bekannt, dass die Wärmeleitfähigkeit von Polystyrolschaum im Wesentlichen von der Rohdichte des fertigen Polystyrol-Hartschaums abhängt, wobei mit zunehmender Rohdichte die Wärmeleitfähigkeit abnimmt bzw. die Wärmedämmung zunimmt. Allerdings weist die Wärmeleitfähigkeit von Polystyrolschaum zwischen 30 und 50 kg/m³ ein Minimum auf, so dass eine darüber hinausgehende Erhöhung der Rohdichte nicht zu einer weiteren Senkung, sondern vielmehr zu einem Anstieg der Wärmeleitfähigkeit führt.

Eine Verringerung der Strahlungsdurchlässigkeit und damit eine Verbesserung der Wärmedämmung konnte lange Zeit nur durch Erhöhung der Rohdichte erreicht werden. Um die Wärmeleitfähigkeitswerte von expandiertem Polystyrol-Hartschaum bei gegebener Raumdichte zu verringern, ist bereits vorgeschlagen worden, den Materialien athermane Stoffe, d.h. wärmeabsorbierende, insbesondere Infrarotstrahlung absorbierende Verbindungen zuzufügen. So sind aus der EP 0 620 246 B1 Formkörper aus Polystyrol-Partikelschaum mit einer Rohdichte von weniger als 20 kg/m³ bekannt, welche 0,5 bis 5 Gew.-% eines athermanen Materials, vorzugsweise ein Metalloxid, Nichtmetalloxid, Ruß, Graphit und/oder Aluminiumpulver, enthalten. Zur Herstellung dieser Formkörper wird dem noch nicht aufgeschäumten Polystyrolgranulat das athermane Material als Additiv zugegeben oder das athermane Material wird auf die vorgeschäumten Polystyrolschaum-Partikel aufgebracht, bevor diese zu Formkörpern verschweißt werden. Weitere Verfahren zur Herstellung solcher Materialien sind in der EP 1 142 942 A2 und der EP 1 159 338 B1 beschrieben. Durch die athermanen, d.h. infrarotreflektierenden Zusätze ist die Farbe des entsprechenden Granulats und damit auch der aufgeschäumten Perlen grau. Der graue Polystyrol-Hartschaum weist eine wesentlich geringere Wärmeleitfähigkeit als weißer Polystyrolschaum gleicher Rohdichte auf, so dass bei grauem Polystyrol-Hartschaum mit weniger Rohstoffeinsatz die gleiche Dämmleistung erzielt werden kann wie mit weißem Polystyrol-Hartschaum.

Ein Nachteil des grauen Materials ist jedoch, dass die zur Zeit auf dem Markt verwendeten grauen Dämmplatten aus expandierbarem Polystyrol, nachfolgend kurz EPS-Dämmplatten genannt, bei Sonneneinstrahlung starke Veränderungen in der Längenausdehnung zeigen. Der Grund hierfür liegt in der Aufheizung der grauen Oberfläche auf ca. 50° C bis 65°C, je nach Rohstoff. Dieser Aufheizeffekt bewirkt ein Aufwölben der Dämmplatten, was zum Ablösen der Platten vom Untergrund oder zu einer Wölbung der Fassadenfläche führen kann. Der Aufheizeffekt wirkt sowohl im Sommer bei hoch stehender Sonne als auch im Winter bei tief stehender Sonne. Aus diesem Grund werden die zu isolierenden Fassaden während des Anbringens der grauen EPS-Dämmplatten bis nach deren Verputzen großflächig mit Gerüstplanen bzw. Gerüstnetzen abgehängt und verschattet.

In der DE 82 26 114 U ist bereits eine kombinierte Wärmedämmplatte vorgeschlagen worden, bei der die äußere Schutzschicht aus einem anorganischen Fasermaterial besteht, um die eigentliche Dämmplatte u.a. gegen Wärmestrahlen zu schützen. Eine solche Dämmplatte ist jedoch nicht dazu geeignet, als Teil eines Wärmedämmverbundsystems (WDVS) zur Isolierung von Hausfassaden oder dgl. zu dienen.

Die grauen EPS-Dämmplatten ermöglichen zwar eine gute Wärmedämmung, sie sind im übrigen aber für sonstige Schutzfunktionen, wie z.B. Schallschutz, weniger geeignet.

EP 1 201 838 A, der als nächstliegender Stand der Technik angaschen werden kann, beschreibt mehrschichtige Dämmplatten aus mindestens zwei Materialschichten aus Polymerschaummaterial, welche flächig miteinander verbunden sind, derart, dass sie einen festen Verbund bilden. Die erste Schicht bildet eine der beiden Aussenflächen der Dämmplatte und besteht aus einem ersten Polymerschaummaterial. Die zweite Schicht besteht aus einem zweiten Polymerschaummaterial, welches aus einem anderen Polymer ist als das Material der ersten Schicht. Das Material der ersten Schicht weist eine bessere Haftung gegenüber zementgebundenen Klebstoffen, wie z.B. Klebemörtel oder Aussenputz, auf als das Material der zweiten Materialschicht. Das Material der zweiten Materialschicht weist hingegen eine geringere Wärmeleitfähigkeit λ in W/mK auf als das Material der ersten Materialschicht und die zweite Materialschicht erstreckt sich über die gesamte flächige Ausdehnung der Platte, so dass sie teilweise oder vollständig die Stirnflächen der Dämmplatte bildet.

Aufgabe der vorliegenden Erfindung ist es daher, eine Dämmplatte der eingangs genannten Art zu schaffen, mit der man sowohl ein hohe Wärmedämmleistung als auch die Vorteile weißer Dämmptatten oder sonstiger Spezialdämmplatten erzielt, sowie ein Verfahren zu ihrer Herstellung zur Verfügung zu stellen.

Diese Aufgabe wird durch die Merkmale des Anspruchs 1 gelöst.

Durch die Verbindung einer grauen inneren EPS-Dämmplatte geringer Wärmeleitfähigkeit mit einer dünnen weißen äußeren EPS-Dämmplatte lassen sich die guten Wärmedämmeigenschaften der grauen EPS-Dämmplatte mit dem günstigen Oberflächentemperaturverhalten einer weißen EPS-Dämmplatte vereinen. Aufgrund der weißen Außenseite bleibt die erfindungsgemäße Wärmedämmplatte auch bei hohen Temperaturen und bei direkter Sonnenbetrahlung formstabil und ist problemlos zu verarbeiten. Ein nachträgliches Schüsseln oder Schrumpfen findet nicht statt. Auch kann das aufwändige Abhängen und Verschatten des Gerüstes entfallen.

Während die graue EPS-Dämmplatte athermane Zusätze enthält, die infrarotabsorbierend sind, ist die weiße EPS-Dämmplatte im Wesentlichen frei von athermanem Material, wobei im Wesentlichen frei im Sinne der vorliegenden Erfindung einen Gehalt von bis zu 0,5 Gew.-% bedeutet. Besonders gute Ergebnisse werden jedoch erhalten, wenn die weiße EPS-Dämmplatte weniger als 0,2 Gew.-% und besonders bevorzugt gar kein athermanes Material enthält.

Das athermane Material der grauen EPS-Dämmplatte ist zweckmäßigerweise aus der aus Graphit, Ruß, Metallpulver, bspw. Aluminiumpulver, Metalloxiden, bspw. Eisen(III)oxid oder Aluminiumoxid, Nichtmetalloxiden, bspw. Siliziumdioxid, und Kombinationen hieraus bestehenden Gruppe ausgewählt. Die Einarbeitung des athermanen Materials in das Polystyrol kann auf jede dem Fachmann bekannte Weise, bspw. mit einem der in den EP 0 620 246 B1, EP 1 142 942 A2 oder EP 1 159 338 B1, die hiermit als Referenz eingeführt und als Teil der Offenbarung gelten, beschriebenen Verfahren, erfolgen.

Gemäß einer bevorzugten Ausgestaltung der Erfindung ist die graue innere EPS-Dämmplatte der kombinierten Wärmedämmplatte einer Wärmeleitfähigkeitsgruppe (WLG) zwischen 025 und 035 zugeordnet, während die weiße äußere EPS-Dämmplatte einer Wärmeleitfähigkeitsgruppe (WLG) zwischen 030 und 050, insbesondere einer WLG 040 zugeordnet ist.

Zur Erzielung einer optimalen Wärmedämmung weist die graue innere EPS-Dämmplatte vorzugsweise eine Dicke größer 20 mm, insbesondere eine Dicke zwischen 50 mm und 200 mm auf. Da eine gute Formbeständigkeit des Dämmmaterials auch bei intensiver direkter Sonneneinstrahlung bereits mit einer weniger als 1 mm dicken Schicht aus weißem Polystyrol-Hartschaum erhalten wird, und um die Gesamtdicke der erfindungsgemäßen Wärmedämmplatte daher möglichst gering zu halten, weist die äußere weiße EPS-Dämmplatte lediglich eine Dicke von 1 mm bis 20 mm, vorzugsweise eine Dicke von 5 mm auf.

Die erfindungsgemäße Wärmedämmplatte lässt sich einer Wärmeleitfähigkeitsgruppe (WLG) zwischen 030 und 040, insbesondere der WLG 035 zuordnen.

Soll die graue EPS-Dämmplatte als "Schalldämmplatte" dienen, d.h. Wände und Decke von Gebäuden nicht nur wärmemäßig, sondern auch akustisch isolieren, so ist der innere Teil der Schalldämmplatte eine aus einem grauen expandierten Polystyrol (EPS) bestehende Kunststoff-Hartschaumplatte mit einem Zusatz von athermanen Stoffen, Insbesondere Infrarotabsorbem bzw. -reflektoren, und der äußere Teil der Schalldämmplatte ist eine akustische Dämmplatte, ebenfalls aus einem Kunststoff-Hartschaum, die erfindungsgemäß eingerichtet ist, einen zusätzlichen akustischen Schallschutz zu erzielen. Dies erfolgt zweckmäßigerweise dadurch, dass die Dämmplatte, die einen zusätzlichen Schallschutz ermöglicht, eine schallabsorbierende Oberflächenstruktur aufweist.

Grundsätzlich lassen sich die beiden Kunststoff-Hartschaum-Platten der Dämmplatten, unabhängig davon, ob es sich um die erfindungsgemäβe reine Wärmedämmplatte oder eine Schalldämmplatte, die auβerhalf des Umfangs der vorliegenden Erfindung liegt, handelt, auf jede dem Fachmann bekannte Weise miteinander verbinden. Dies kann bspw. mittels Klebstoff erfolgen, wobei lösungsmittelfreie Klebstoffe bevorzugt sind, um die Gefahr eines partiellen Aüflösens der Oberflächen der beiden Polystyrolschichten durch Lösungsmittel auszuschließen. Es hat sich aber als besonders vorteilhaft erwiesen, wenn die inneren und die äußeren Kunststoff-Hartschaum-Platten thermisch miteinander verbunden sind:

Ein allgemeiner Verfahren zum Verbinden zweier Kunststoff-Hartschaum-Platten, insbesondere Polystyrol-Hartschaumstoff-Dämmplatten, zur einer kombinierten Dämmplatte, Insbesondere einer Wärmedämmplatte oder einer Schalldämmplatte, das auβerhalf des Umfangs der vorliegenden Erfindung liegt, sieht vor, dass die zu verbindenden Schaumstoffplatten zunächst aneinander anliegend angeordnet werden, dass danach erhitzte Metallnadeln über die Fläche der Schaumstoffplatten gleichmäßig verteilt an zahlreichen Stellen durch die eine der beiden Schaumstoffplatten hindurch bis in die andere Schaumstoffplatte hinein gestochen werden und dass die Metallnadeln nach dem thermischen Verschweißen der Kontaktflächen zwischen den aneinander anliegenden Schaumstoffplatten wieder aus den beiden Schaumstoffplatten herausgezogen werden.

Besonders gute Ergebnisse werden mit diesem Verfahren erzielt, wenn die beiden miteinander zu verbindenden Schaumstoffplatten aus expandiertem Polystyrol (EPS) bestehen.

Um eine ausreichend feste Verbindung der beiden Kunststoffschichten zu erreichen, wird vorgeschlagen, die heißen Nadeln mindestens 1 mm, bevorzugt jedoch mindestens 5 mm in die andere aufnehmende Kunststoff-Hartschaum-Platte zu stechen. Die Eintauchtiefe der heißen Nadeln in die andere Schaumstoffplatte, die Temperatur der heißen Nadeln sowie deren Verweilzeit in der andere Schaumstoffplatte vor dem Herausziehen der Nadeln hängen von den eingesetzten Kunststoffmaterialien und der gewünschten Festigkeit der Verbindung ab und können im Rahmen routinemäßiger Versuche einfach bestimmt werden.

Aufgrund des Verschmelzens einer Vielzahl von Kontaktflächen zwischen den beiden Schaumstoffplatten durch die an einer Aufnahme in Form eines Punktrasters angeordneten Nadeln werden die beiden Schaumstoffplatten erfindungsgemäß thermisch miteinander verbunden.

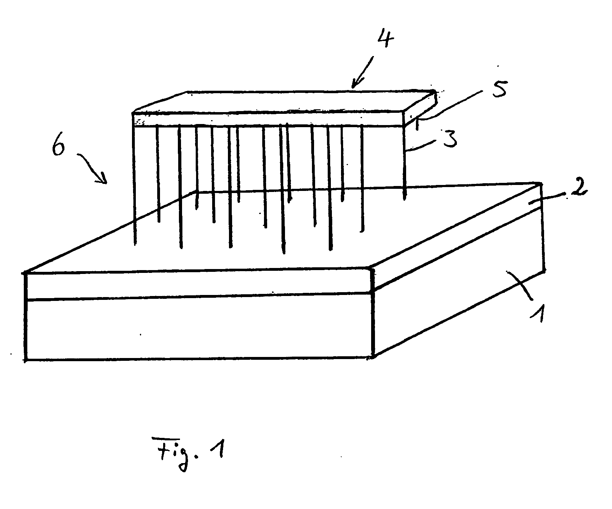

Die Erfindung wird nachfolgend an einem Ausführungsbeispiel in Form einer Wärmedämmplatte und der Zeichnung näher beschrieben. Weitere erfindungsgemäße Merkmale sowie vorteilhafte Ausgestaltungen der erfindungsgemäßen Dämmplatte sind in den Neben- bzw. Unteransprüchen aufgeführt.

Die einzige Figur zeigt schematisch den Verfahrensschritt der thermischen Verbindung zweier Dämmplatten aus expandierbarem Polystyrol (EPS).

Zwei aneinander anliegende EPS-Dämmplatten 1 und 2 auf Basis von Polystyrolschaum, von denen nur die graue EPS-Dämmplatte 1 ein athermanes Material, bspw. Aluminium in einer Menge von 2 Gew.-%, enthält, werden thermisch miteinander verbunden, indem durch die andere weiße EPS-Dämmplatte 2 hindurch eine Vielzahl von untereinander in Form eines Punktrasters angeordnete erhitzte Nadeln 3 aus Metall bis in die graue EPS-Dämmplatte 1 gestochen, dort für eine vorbestimmte Zeit belassen und anschließend wieder herausgezogen werden. Die Nadeln 3 sind auf einer nur schematisch dargestellten Halte- und Heizplatte 4 angeordnet, durch die sie auf die notwendigen Temperaturen aufgeheizt werden. An der Unterseite der Halteplatte 4 ist eine Isolierung, insbesondere in Form einer Isolierplatte 5 aus thermisch nicht leitendem Material, vorgesehen, um zu verhindern, dass nach dem Herunterdrücken der Halteplatte 4 Wärme von der Halteplatte 4 auf die der Halteplatte 4 zugesandten Oberfläche der weißen EPS-Dämmplatte 2 der Wärmedämmplatte 6 übertritt und diese damit beschädigt. Die Hitze wird also nur über die Nadeln übertragen.

Durch die thermische Verbindung wird eine feste Verbindung zwischen den beiden Kunststoff-Hartschaum-Platten 1 und 2 sichergestellt.

## Patentansprüche

1. Wärmedämmplatte, insbesondere zur Isolierung von Fassaden, Dächern, Wänden und Decken von Gebäuden, bestehend aus zwei Teilen (1, 2), wobei der eine Teil der Wärmedämmplatte die wesentliche Dämmwirkung erbringt, während der andere Teil der Wärmedämmplatte eine zusätzliche Schutzfunktion erfüllt, wobei der die wesentliche Dämmwirkung erbringende eine Teil der Wärmedämmplatte der zu der isolierenden Fläche zugewandte innere Teil (1) der Wärmedämmplatte (6) ist, während der die zusätzliche Schutzfunktion erfüllende andere Teil der Dämmplatte der nach außen weisende Teil der Wärmedämmplatte (6) ist, wobei der innere Teil der Wärmedämmplatte eine Dämmplatte (1) aus einem grauen expandierten Polystyrol mit einem Zusatz von athermanen Stoffen, insbesondere Infrarotabsorbern bzw. -reflektoren, ist und der äußere Teil der Wärmedämmplatte eine dünnere Dämmplatte (2) aus einem weißen expandierten Polystyrol ist, das im Wesentlichen, das heißt mit einem Gehalt von bis zu 0,5 Gew.-%, frei von athermanen Bestandteilen ist und ein geringeres Dämmvermögen als die graue innere Dämmplatte (1) aufweist.

2. Wärmedämmplatte nach Anspruch 1, wobei das athermane Material der inneren Dämmplatte (1) aus der aus Graphit, Ruß, Metallpulver, bspw. Aluminiumpulver, Metalloxiden, bspw. Eisen(III)oxid oder Aluminiumoxid, Nichtmetalloxiden, bspw. Siliziumdioxid, und Kombinationen hieraus bestehenden Gruppe ausgewählt ist.

3. Wärmedämmplatte nach Anspruch 1 oder 2, wobei die die Wärmedämmplatte (6) bildende innere und die äussere Dämmplatte (1, 2) thermisch miteinander verbunden sind.

4. Wärmedämmplatte nach einem der Ansprüche 1 bis 3, wobei die graue im innere Dämmplatte (1) einer Wärmeleitfähigkeitsgruppe zwischen 025 und 035 zugeordnet ist.

5. Wärmedämmplatte nach einem der Ansprüche 1 bis 3, wobei die weiße äußere Dämmplatte (2) einer Wärmeleitfähigkeitsgruppe zwischen 030 und 050, insbesondere einer Wärmeleitfähigkeitsgruppe von 040 zugeordnet ist.

6. Wärmedämmplatte nach einem der Ansprüche 1 bis 5, wobei die graue innere Dämmplatte (1) eine Dicke grösser 20 mm, insbesondere eine Dicke zwischen 50 mm und 200 mm aufweist.

7. Wärmedämmplatte nach einem der Ansprüche 1 bis 6, wobei die weiße äußere Dämmplatte (2) eine Dicke von 1 mm bis 20 mm, insbesondere eine Dicke von 5 mm aufweist.

8. Wärmedämmplatte nach einem der Ansprüche 1 bis 7, wobei die kombinierte Wärmedämmplatte einer Wärmeleitfähigkeitsgruppe zwischen 030 und 040, insbesondere der Wärmeleitfähigkeitsgruppe 035 zugeordnet ist.

## Claims

1. Thermal insulation board, in particular for insulating the facades, roofs, walls and ceilings of buildings, comprising two parts (1, 2), wherein one part of the thermal insulation board provides the main insulation effect whereas the other part of the thermal insulation board meets an additional protective function, wherein the one part of the thermal insulation board providing the main insulation effect is the inner part (1) of the thermal insulation board (6) facing the surface to be insulated, whereas the other part of the insulation board meeting the additional protective function is the outwardly facing part of the thermal insulation board (6), wherein the inner part of the thermal insulation board is an insulation board (1) made of a grey expanded polystyrene with an addition of athermous substances, in particular infrared absorbers or reflectors, and the outer part of the thermal insulation board is a thinner insulation board (2) made of a white expanded polystyrene, which is substantially free from athermous constituents, i.e. having a content of up to 0.5 % by weight thereof, and has a lower insulation capacity than the grey inner insulation board (1).

2. Thermal insulation board according to claim 1, wherein the athermous material of the inner insulation board (1) is selected from the group graphite, carbon black, metal powder, e.g. aluminium powder, metal oxides, e.g. iron(III) oxide or aluminium oxide, non-metal oxides, e.g. silicon dioxide, and combinations thereof.

3. Thermal insulation board according to claim 1 or 2, wherein the inner insulation board forming the thermal insulation board (6) and the outer insulation board (1, 2) are connected to one another thermally.

4. Thermal insulation board according to one of claims 1 to 3, wherein the grey inner insulation board (1) is assigned to a thermal conductivity group between 025 and 035.

5. Thermal insulation board according to one of claims 1 to 3, wherein the white outer insulation board (2) is assigned to a thermal conductivity group between 030 and 050, in particular to a thermal conductivity group of 040.

6. Thermal insulation board according to one of claims 1 to 5, wherein the grey inner insulation board (1) has a thickness of more than 20 mm, in particular a thickness of between 50 mm and 200 mm.

7. Thermal insulation board according to one of claims 1 to 6, wherein the white outer insulation board (2) has a thickness of 1 mm to 20 mm, in particular a thickness of 5 mm.

8. Thermal insulation board according to one of claims 1 to 7, wherein the combined thermal insulation board is assigned to a thermal conductivity group between 030 and 040, in particular to the thermal conductivity group 035.

## Revendications

1. Panneau d'isolation thermique, en particulier pour l'isolation de façades, toitures, murs et toits d'immeubles, consistant en deux parties (1, 2), dont une partie du panneau d'isolation thermique fourni l'essentiel de l'effet isolant, alors que l'autre partie du panneau d'isolation thermique remplit une fonction de protection supplémentaire, dont la partie générant l'essentiel de l'effet isolant du panneau d'isolation thermique est la partie intérieure (1) du panneau d'isolation thermique (6), qui est placée en regard de la surface à isoler, alors que l'autre partie du panneau d'isolation thermique, qui remplit la fonction de protection supplémentaire, est la partie placée à l'extérieur du panneau d'isolation thermique (6), dont la partie intérieure du panneau d'isolation thermique est un panneau isolant (1) composé d'un polystyrène expansé gris avec un adjuvant en matériaux athermanes, en particulier des substances absorbant ou réfléchissant les infrarouges, et la partie extérieure du panneau d'isolation thermique est un panneau plus fin (2) constitué d'un polystyrène expansé blanc, qui est substantiellement, c'est-à-dire avec une teneur de maximum 0,5 poids/%, exempt de composants athermanes et présente un pouvoir isolant plus faible que celui du panneau isolant intérieur (1).

2. Panneau d'isolation thermique selon la revendication 1, dont le matériau athermane du panneau isolant intérieur (1) est choisi dans le groupe composé de graphite, noir de carbone, métal pulvérisé, par exemple d'aluminium pulvérisé, d'oxydes métalliques, par exemple d'oxyde ferrique ou d'oxyde d'aluminium, d'oxydes non métalliques, par exemple de dioxyde de silice et de combinaisons de ceux-ci.

3. Panneau d'isolation thermique selon les revendications 1 ou 2, dont les panneaux isolants intérieur et extérieur (1,2) qui forment le panneau d'isolation thermique (6) sont reliés thermiquement l'un à l'autre.

4. Panneau d'isolation thermique selon les revendications 1 à 3, dont le panneau isolant intérieur gris (1) appartient à un groupe de conductibilité thermique compris entre 025 et 035.

5. Panneau d'isolation thermique selon les revendications 1 à 3, dont le panneau isolant extérieur blanc (2) appartient à un groupe de conductibilité thermique compris entre 030 et 050, en particulier à un groupe de conductibilité de 040.

6. Panneau d'isolation thermique selon les revendications 1 à 5, dont le panneau isolant intérieur gris (1) présente une épaisseur supérieure à 20 mm, en particulier une épaisseur comprise entre 50 mm et 200 mm.

7. Panneau d'isolation thermique selon les revendications 1 à 6, dont le panneau isolant extérieur blanc (2) présente une épaisseur de 1 mm à 20 mm, en particulier une épaisseur de 5 mm.

8. Panneau d'isolation thermique selon les revendications 1 à 7, dont le panneau combiné appartient à un groupe de conductibilité thermique compris entre 030 et 040, en particulier à un groupe de conductibilité de 035.
